# EUROPEAN PATENT APPLICATION

(11) **EP 4 821 800 A1**
(43) Date of publication of application: **14.10.2026**
(21) Application number: 26170983.6
(22) Date of filing: 07.04.2026
(51) Int. Cl.: B62D 25/06, B65D 88/74, E01C 19/08, E01C 19/18, E01C 23/06

(54) **VEHICLE FRONT CROSS-MEMBER**

(30) Priority: 08.04.2025 ES 202530290
(71) Applicant: Seat, S.A., 08760 Martorell - Barcelona (ES); Volkswagen AG, Wolfsburg (DE); Skoda Auto a.s., 29301 Mladá Boleslav (CZ)
(72) Inventor: Lapresta Rey, Jose Pedro, Martorell (ES); Ruiz Ruiz, Carlos Manuel, Martorell (ES); Cartanyà Salvat, Mònica, Martorell (ES); Larráyoz Izcara, Xabier, Martorell (ES); Oriol Salvador, Alan, Martorell (ES)
(74) Representative: Pons IP

(57) **Abstract**

The invention relates to a vehicle front cross-member intended to be fixed transversely between the side structural flanks (1) of the vehicle and an outer roof covering (2), wherein the front cross-member comprises a profile consisting of: a base (3), a rear fixing flange (5) and a front fixing flange (10) with support surfaces intended to be fixed to the outer roof covering (2). The profile of the front cross-member defines several sectors: a central sector (6) comprising a first distance (d1) defined between the rear flange (5) and the base (3), the value of which is constant; each side sector (7) comprises a second distance (d2), the value of which is constant and greater than the first distance (d1); and each intermediate sector (8) comprising a third distance (d3), the value of which is variable between the first distance (d1) and the second distance (d2).

## Description

### OBJECT OF THE INVENTION

The object of the invention relates to a front cross-member of a vehicle, situated between the side structural flanks and between the outer covering and inner covering of the roof of a vehicle. The front cross-member of the invention comprises different sectors in which the distance between the base and the rear fixing flange of the front cross-member is different in each sector, such that vibration and deformation thereof is controlled.

### BACKGROUND OF THE INVENTION

Front cross-members are widely used in vehicles, forming part of the vehicle's structure. Its main function is to provide structural rigidity to the foremost area of the roof of said vehicle. Specifically, the front cross-member is fixed between the side flanks of the vehicle, extending longitudinally from a first side flank to a second side flank. Furthermore, the front cross-member is fixed to an outer covering of the roof and close to the front windscreen of the vehicle. Additionally, the roof has at least one rear cross-member between the side flanks and close to the rear window of the vehicle, and may have parallel cross-members between the front and rear cross-members.

Typically, front cross-members have a section that remains constant from a first side flank to a second side flank, simplifying manufacturing, in the same way that other structural elements and other cross-members in the structure are made. However, this presents some drawbacks, given that in the event of an accident in which the vehicle rolls over or is subjected to a significant force on a side or roof, the cross-member deforms uncontrollably, making it impossible to predict the form of bending or deformation of the front cross-member. This prevents being able to anticipate or predict behaviour in the event of an accident or to use additional reinforcements.

Moreover, it is known that vibrations occur in the vehicle as a result of the very movement of the vehicle. These vibrations from the vehicle are transmitted and cause vibration frequencies in the cross-members, such that each cross-member causes a vibration with a maximum amplitude at a particular frequency. Coupling in the vibration of the front cross-member and rear cross-member at a given vibration frequency must be prevented, as this causes the vibration amplitudes to combine, causing an unpleasant noise for the occupants when said resonance coupling occurs.

One example of a solution is shown in document IN201611044192, which shows a reduction in height of the sectional profile across the entire width of the front cross-member, such that the front cross-member can differ from other cross-members, thereby preventing maximum amplitude frequency coupling. In this way, the maximum amplitude of the front cross-member occurs at a lower vibration frequency than that of the rear cross-member and resonance coupling is prevented. However, this cross-member with a lower height presents significant drawbacks in terms of impact, given that since it has a smaller section, it is weaker and easily deformable, and it may even break. Furthermore, in the event of an accident, it is impossible to know where the front cross-member would deform, as this is entirely random.

Another solution is document IN2926CH2014A, in which the sectional profile of the front cross-member is widened to modify maximum amplitude vibration frequency. In this way, by means of a section widened from a minimum profile close to the flank to a larger profile in the central area of the cross-member, the vibration frequency at which maximum amplitude occurs in the front cross-member is higher than in the other cross-members and, therefore, prevents resonance coupling of the different cross-members. However, this embodiment results in a weakening of the front cross-member at the area where it is attached to the flank, therefore making it the weakest part and the easiest to break or become deformed in the event of an accident. Furthermore, this solution represents an increased cost of the front cross-member due to the use of more material and takes up more space in the passenger compartment of the vehicle, two aspects that are generally sought to be avoided in structural components of vehicles.

### DESCRIPTION OF THE INVENTION

The object of the invention relates to a vehicle front cross-member which comprises at least three distinct sectors from a first side flank to a second side flank. In particular, the distance existing between a base and a rear flange of the front cross-member, that is, the support surface generated for the outer roof covering, is different in each sector.

The profile of the front cross-member defines, along the longer sides of the base, that is, from one side flank to the other, several sectors consisting of: a central sector, two side sectors intended to be fixed to each of the flanks, and two intermediate sectors situated between each side sector and the central sector.

The front cross-member comprises a profile consisting of a base, two side walls and two fixing flanges. Said profile may be U-shaped with two symmetrical side walls, or it may have two different side walls. The two fixing flanges would extend substantially parallel to the base from each of the two side walls of the U-shaped profile.

The present invention refers to shorter sides and longer sides of the front cross-member based on the length of said sides. The front cross-member has a substantially rectangular geometry when seen in plan view. Accordingly, the front cross-member has two sides that are longer in length, extending across the width of the vehicle, and two sides that are shorter in length, extending along the length of the vehicle.

On the one hand, the base comprises two shorter sides facing the flanks and two longer sides perpendicular to the shorter sides and extending from one flank to the opposite one.

On the other hand, the fixing flanges consist of a rear fixing flange and a front fixing flange defining two support surfaces intended to contact and be fixed to the outer roof covering. In this way, the front cross-member and the outer roof covering are fixed to one another, with the shape of the flanges corresponding to the outer covering being for establishing continuous contact between the first side flank and the second side flank.

The side walls are a rear side wall and a front side wall facing one another, each of which connects a respective longer side of the base to the rear fixing flange and the front fixing flange, respectively.

Optionally, the front side wall has a smaller size than the rear wall, such that the base is parallel to the rear flange and the outer roof covering, or the base copies the shape of the outer roof covering. In this way, the space taken up by the front cross-member inside the passenger compartment of the vehicle is reduced by reducing the height of the front side wall, but without reducing the strength of the front cross-member.

Unlike the front cross-members known in the prior art, in the front cross-member of the present invention, characteristically, the profile of the front cross-member defines, along the longer sides of the base, several sectors consisting of a central sector, side sectors fixed to the flanks and intermediate sectors between the side sectors and the central sector. These sectors differ in terms of the distance between the base and the rear flange, such that: the first distance between the base and the rear flange in the central sector is constant; the second distance in the side sectors is constant and is greater than the first distance; and the third distance in the intermediate sectors is variable between the first distance and second distance.

Therefore, since the first distance in the central sector is less than the second and third distances of the side and intermediate sectors, the profile of the central sector modifies the frequency at which the maximum amplitude of the front cross-member occurs. It is thereby controlled that the frequency at which the maximum amplitude occurs in the front cross-member is lower than in the other cross-members, which prevents resonance coupling of the frequencies and eliminates acoustic problems. In this way, the frequency at which the maximum amplitude of the rear cross-member or any of the intermediate cross-members occurs is higher than the frequency of the front cross-member.

Furthermore, in the event of an accident in which the side wall is subjected to a significant compressive force, such as when a vehicle rolls over, optimal performance of the front cross-member is ensured due to the sectors. Thus, the side sectors are subject to the greatest stress and, according to the present invention, comprise a stronger section, as the second distance is the longest of the entire cross-member. Similarly, the central sector has the weakest section, since the first distance is the shortest in the entire cross-member, thereby ensuring that deformation of the cross-member under said compressive forces occurs in the transition area between the central sector and the intermediate sector. Obtaining stable deformation performance of the front cross-member is essential for the safety of the vehicle's occupants.

Furthermore, since the central sector has the first distance, and therefore the profile with the smallest dimensions of the cross-member, in the event that the geometry of the interior covering is adapted and fitted to the base in the central sector, the space available for the passenger compartment of the vehicle is increased. Said available space is relevant for vehicles of smaller dimensions, where headroom plays a crucial role in the vehicle's design.

Different sectors have been described in this invention. It should be understood that the profile of said sectors is not constant along the length thereof, but may vary slightly; for example, there may be holes for attaching and retaining other elements, or other geometries specifically arranged at the base to meet other particular requirements of the cross-member. Despite this, it can be understood that the first distance and the second distance remain substantially constant throughout their respective sectors.

Alternatively, in the event that the base is separated from the inner covering in the central sector and intermediate sector, the space between the base and the inner covering may be occupied by other components of the vehicle, such as sun visors, sun visor reinforcements or the base of the rear-view mirror. Similarly, this configuration allows the interior space in the passenger compartment of the vehicle to be increased.

According to one embodiment of the present invention, the third distance decreases from the second distance of the side sectors to the first distance of the central sector. In this way, the intermediate sector can be staggered such that the third distance has certain values that decrease from the second distance to the first distance.

Based on the above, the third decreasing distance allows a change between the second distance and first distance, with the front cross-member being a single piece.

According to one particular embodiment, the third distance decreases progressively from the second distance of the side sectors to the first distance of the central sector. This progressive decrease allows the stability of the performance of the front cross-member, particularly at the points of deformation, to be increased.

The central sector may account for between 15% and 60% of the total length of the front cross-member, that is, the sum of the lengths of the central sector, the side sectors and the intermediate sectors. Preferably, the central sector may account for between 45% and 55% of the total length of the central sector, the side sectors and the intermediate sectors. More preferably, the central sector may account for 50% of the sum of the lengths of the central sector, the side sectors and the intermediate sectors.

The central sector has a length that is enough to modify the frequency at which the maximum amplitude of the front cross-member occurs, but its length is limited so that deformation in the event of an accident is controlled. Therefore, a very short central sector would not modify the frequency at which the maximum amplitude occurs, and a very long central sector would deform in an uncontrolled manner in the event of an accident.

Moreover, the first distance in the central sector is between 15% and 50% less than the second distance of the side sector. Preferably, the first distance is between 30% and 40% less than the second distance. More preferably, however, the first distance is 35% less than the second distance.

The first distance has a size that is enough to modify the frequency at which maximum amplitude occurs, but with a size reduction that is limited to prevent generating a profile that is too weak compared to the profiles of the side or intermediate sectors. Therefore, a first distance that is very large and similar to the second distance, would have no effect on the frequency at which maximum amplitude occurs, whereas a first distance that is very small would cause the central sector to deform easily under compressive stresses.

Optionally, the cross-member may further comprise brackets intended to fix the side sectors to the flanks, such that better fixing to the flanks and a simplified manufacturing are achieved, since the brackets adapt the end of the front cross-member to the fixing points on the flanks.

Optionally, the cross-member may further comprise a longitudinal cover between the flanks, which is fixed on the base and on at least one fixing flange and is intended to adapt the fixing flange to the outer covering. This cover improves the positioning and adaptation of the front cross-member with respect to the outer covering, further allowing better performance in the event of an accident.

Optionally, the front cross-member further comprises a longitudinal reinforcement between the flanks, which is fixed to the base, allowing the rigidity of the front cross-member to improve in the event of an accident. The longitudinal reinforcement makes it difficult for the base to break in the event of an accident and can help to control the deformation site, increasing the structural rigidity thereof along the length of said front cross-member.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective view of the structure of a vehicle according to a known embodiment in the prior art.
Figure 2 shows a perspective view of the front cross-member in accordance with the present invention.
Figure 3 shows a sectional view of the central sector of the front cross-member shown in Figure 2.
Figure 4 shows a sectional view of the intermediate sector of the front cross-member shown in Figure 2.
Figure 5 shows a sectional view of the side sector of the front cross-member shown in Figure 2.
Figure 6 shows a front view of the front cross-member in accordance with the present invention.
Figure 7 shows a perspective view of the front cross-member with a cover, according to a variant of the present invention.
Figure 8 shows a perspective view of the front cross-member with a reinforcement, according to another variant of the present invention.
Figure 9 shows a schematic view of the deformation of the front cross-member under a compressive force.

### PREFERRED EMBODIMENT OF THE INVENTION

A preferred embodiment of a vehicle front cross-member, which is the object of this invention, is described below.

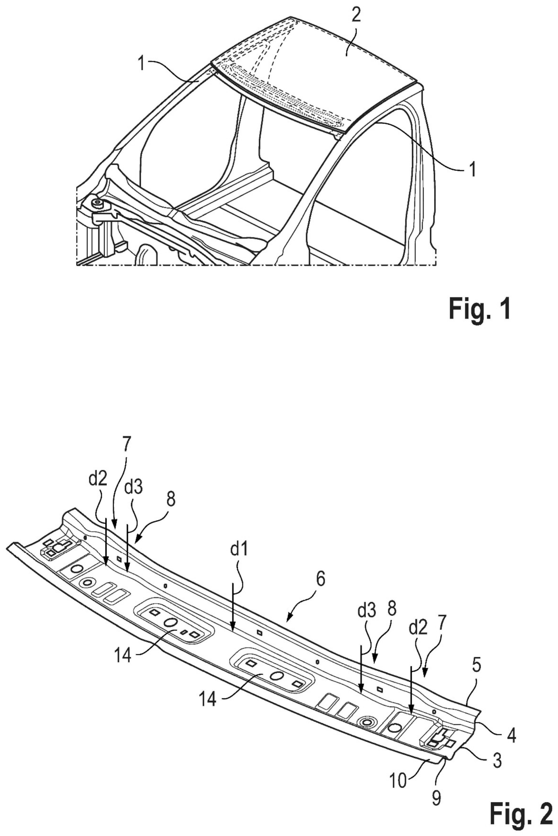

Figure 1 shows the structure of a vehicle in which the front cross-member is fixed transversely between side structural flanks (1) of the vehicle. Said front cross-member is an essentially elongated component that extends across the width of the vehicle, between said flanks (1).

Specifically, the front cross-member is located between an outer roof covering (2) and an inner roof covering of the vehicle, not shown.

The structure of the vehicle is the generally non-visible structural part of the vehicle, such that the front cross-member is situated under the roof covering of the vehicle, between the flanks (1) and close to the front windscreen of the vehicle. Similarly, it is situated above the driver and front passenger.

In the finished vehicle, the front cross-member is concealed by the outer roof covering (2), which forms the visible outer surface, and by the inner roof covering facing the occupants, which forms the visible inner surface, therefore being a non-visible structural element.

Figure 2 shows a perspective view of the front cross-member according to one embodiment of the present invention. Said front cross-member comprises a profile consisting of: a base (3) with its two shorter sides facing the flanks (1) and its two longer sides perpendicular to the shorter sides, a rear fixing flange (5) and a front fixing flange (10) defining two support surfaces intended to contact and be fixed to the outer roof covering (2), and a rear side wall (4) and a front side wall (9) facing one another, each of which connects a respective longer side of the base (3) to the rear fixing flange (5) and the front fixing flange (10), respectively.

The profile of the front cross-member defines, along the longer sides of the base (3), several sectors consisting of: a central sector (6), two side sectors (7) intended to be fixed to each of the flanks (1), and two intermediate sectors (8) situated between each side sector (7) and the central sector (6).

The central sector (6) comprises a first distance (d1) defined between the rear flange (5) and the base (3), the value of which is constant throughout said central sector (6); each side sector (7) comprises a second distance (d2) defined between the rear flange (5) and the base (3), the value of which is constant throughout each side sector (7) and greater than the first distance (d1) of the central sector (6); and the intermediate sector (8) comprises a third distance (d3) defined between the rear flange (5) and the base (3), the value of which is variable between the first distance (d1) and the second distance (d2).

As described in greater detail below, the sectors do not comprise an invariable geometry along their length. For example, the base (3) of the central sector (6) comprises holes and at least one recess (14) that modify its geometry. Despite this, the first distance (d1) is substantially the same throughout the central sector (6), just as the second distance (d2) is substantially the same throughout its respective side sector (7).

Said Figure 2 shows that the front cross-member has a U-shaped profile, consisting of the base (3), the front side wall (9) and the rear side wall (4). The distances (d1, d2, d3) are indicated by means of an arrow, depicting said distances (d1, d2, d3) between the base (3) and the rear fixing flange (5).

In each intermediate sector (8), the third distance (d3) decreases from the second distance (d2) of the side sectors (7) to the first distance (d1) of the central sector (6). Furthermore, the third distance (d3) decreases progressively from the second distance (d2) of the side sectors (7) to the first distance (d1) of the central sector (6). As an alternative to the progressive decrease, in another embodiment not shown, the decrease is staggered.

Moreover, the support surfaces of the fixing flanges (5, 10) are flat throughout the side sectors (7), the intermediate sectors (8) and the central sector (6). In this way, the roof covering (2) is fixed to the flanges (5, 10) for the fixing thereof by means of welding, adhesive bonding or sealing, as appropriate.

At the ends of the front cross-member, the side walls (4, 9) and flanges (5, 10) are modified for the fixing thereof to the flanks (2). The outer covering (2) is therefore fixed to the flanges (5, 10) from one side sector (7) to the other side sector (7).

Given that the flanges (5, 10) are flat along their entire length, the reduction in the third distance (d3) is produced by means of the base (3), which has a ramp or inclined sector towards the flanges (5, 10) in the intermediate sector (8), thereby reducing the third distance (d3) between the rear flange (5) and the base (3).

The base (3) also has localised recesses (14) in the central sector (6) which partially separate part of the base (4) from the outer covering (2), without modifying the first distance (d1) of the rear flange (5). These recesses (14) are arranged in the base (3) and are intended to couple or fix other elements of the vehicle to the front cross-member, such as the inner covering or sun visors.

The central sector (6) comprises a length, according to the direction of the longer sides of the base (3), of between 15% and 60% of the sum of the lengths of the side sectors (7), the intermediate sectors (8) and the central sector (6). More specifically, the central sector (6) comprises a length, according to the direction of the longer sides of the base (3), of between 45% and 55% of the sum of the lengths of the side sectors (7), the intermediate sectors (8) and the central sector (6).

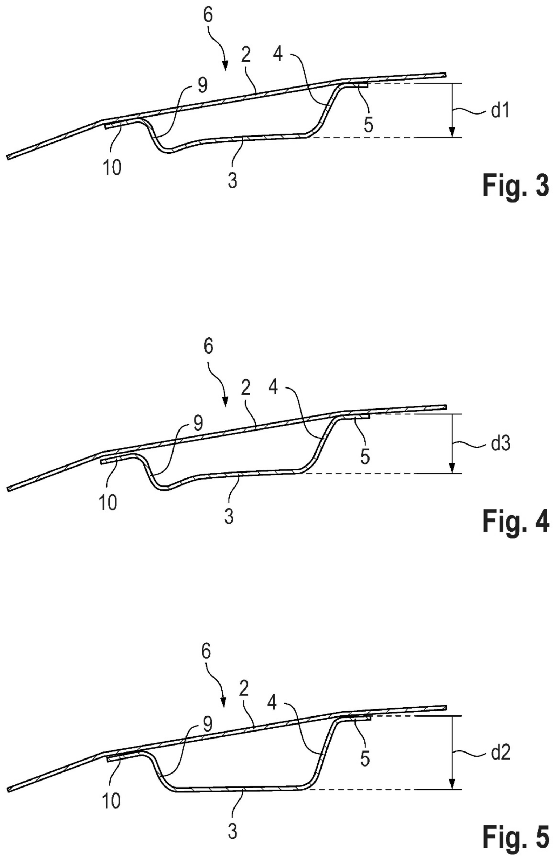

Figures 3, 4 and 5 show sections of the front cross-member in the different sectors (6, 7, 8), showing the profile and the outer covering (2). In the different sections, the outer covering (2) is supported on the flanges (5, 10) in accordance with the position of the front cross-member in the vehicle. This outer covering (2) has been depicted as a curved line to simplify said sections and make them easier to understand. Despite this, other components such as the front windscreen or other reinforcements are implemented in said areas of the vehicle, but are not depicted.

Although the first distance (d1), the second distance (d2) and the third distance (d3) are depicted as the distance comprised between the rear fixing flange (5) and the base (3), according to a direction perpendicular to same, the rear fixing flange (5) and the base (3) may not be entirely parallel to one another. In any case, these first, second and third distances (d1, d2, d3) must be understood as being obtained according to a direction substantially perpendicular to said rear fixing flange (5).

Figure 3 shows a section of the central sector (6) in which the profile and the first distance (d1) between the base (3) and the rear flange (5) can be seen. Given that the first distance (d1) is constant, this section is repeated throughout the central sector (6).

In the central sector (6), the base (3) is close to the outer casing (2), such that the rear and front side walls (4, 9) comprises a smaller length with respect to the length of said rear and front side walls (4, 9) in the other intermediate and side sectors (8, 7). As can be seen, the U-shaped geometry of the profile of the front cross-member creates a cavity, it being in said central sector (6) where said cavity is the smallest, that is, where the separating distance between the base (3) and the outer covering (2) is the smallest.

Figure 4 shows a section of the intermediate sector (8), in which the profile and the third distance (d3) between the base (3) and the rear flange (5) can be seen. This section is one of the possible sections given that the third distance (d3) is variable between the first distance (d1) and the second distance (d2). In this way, the section in the intermediate sector (3) has a larger cavity than that of the central sector (1), since the third distance (d3) is always greater than the first distance (d1), although less than the second distance (d2).

**In** the intermediate sector (8), the flanges (5, 10) are in contact with the outer covering (2), as in the central sector (6) and the side sectors (7), and the position of the base (3) with respect to the rear fixing flange (5) varies with the third distance (d3), such that the rear side wall (4) is modified accordingly in reference to its height.

Similarly, the front side wall (9) and the distance between the base (3) and the front fixing flange (10) could vary in the same way as the third distance (d3) in the rear side wall (4). Despite this, said third distance (d3) may depend on other factors, such as the design.

Figure 5 shows a section of the side sector (7), in which the profile and the second distance (d2) between the base (3) and the rear flange (5) can be seen. Given that the second distance (d2) is constant, this section is repeated throughout the side sector (7).

**In** the side sectors (7), the base (3) is in the position furthest away from the flanges (5, 10) and the outer covering (2), such that the side walls (4, 9) are larger in size than in the central or intermediate sectors (6, 8). **In** particular, the rear side wall (4) comprises a taller height than the other intermediate and central sectors (6, 8). Similarly, the cavity formed in the side sector (7) between the front cross-member and the outer covering (2) is the largest in the cross-member.

Moreover, in the side sectors (7), the inner covering is fixed to the base (3) in the usual manner, which is not depicted in the figures.

**In** these sections, the first distance (d1) is between 15% and 50% less than the second distance (d2), and more specifically, the first distance (d1) is between 30% and 40% less than the second distance (d2).

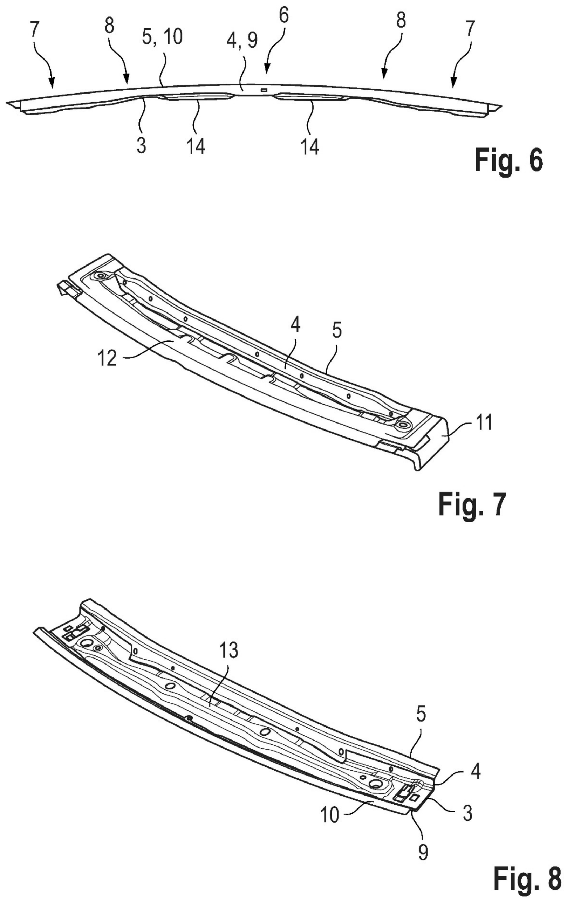

Figure 6 shows a front view of the front cross-member, showing the rear side wall (4) or the front side wall (9), in which the different sectors (6, 7, 8) can be seen.

The central sector (6) has a constant first distance (d1), the intermediate sectors (8) have a variable third distance (d3) and the side sectors (7) have a constant second distance (d2). Although the shape of the front cross-member is curved to form an arc, the distances (d1, d2, d3) are established between the base (3) and the rear flange (5), which generates a surface for supporting and fixing the outer covering (2). As can be seen, the front and rear fixing flanges (10, 5) generate said curved surface, but it is the base (3) that is closer to or further away from said front and rear flanges (10, 5) to achieve the modification in profile described above, where the first distance (d1) is less than the second distance (d2).

In this way, the base (3) and the side walls (4, 9) are modified to vary the third distance (d3), with the base (3) generating an inclined ramp in the intermediate sectors (8) to achieve the progressive decrease in the separation distance between the rear fixing flange (5) with respect to the base (3) from the second distance (d2) to the first distance (d1). In the transition areas between the different sectors, said ramp of the base (3) is rounded. Thus, said rounded transition between the base (3) of the central sector (6) and the base (3) of each intermediate sector (8) can be seen. Said rounded transition between the base (3) of the side sectors (7) with their respective intermediate sectors (8) can also be seen.

In this embodiment, the side sectors (7) extend to the ends of the front cross-member, such that the front cross-member is fixed to the flank (1) by means of brackets (11), which are fixed on one side to the front cross-member and on the opposite side to the flank (1).

Figure 7 shows an embodiment variant of the front cross-member, seen in perspective, which further comprises a longitudinal cover (12) and brackets (11) arranged on each of the side edges of the front cross-member. Said cover (12) is fixed on the base (3) and on at least one fixing flange (5, 10) and is intended to adapt the fixing flange (5, 10) to the outer covering (2). The cover (12) is therefore situated between the front cross-member and the outer covering (2), and more specifically, between the front flange (10) and the outer covering (2). Whether or not the cover (12) is present does not vary the configuration of the above-described distances (d1, d2, d3) and sectors (6, 7, 8) of the front cross-member.

The front cross-member further comprises brackets (11) in the side sectors (7) intended to fix the side sectors (7) to the flanges (1). These brackets (11) have one part that can be coupled to the end of the side sector (7) and another part that can be coupled to the flank (1), such that one front cross-member can be fixed to different flanks by means of different brackets (11).

Figure 8 shows another embodiment variant of the front cross-member, seen in perspective, which further comprises a longitudinal reinforcement (13) between the flanges (1), which is fixed to the base (3). Said reinforcement (13) overlaps the base (3), with the reinforcement (13) having a shape corresponding to that of the base (3) in the side sectors (7), the intermediate sectors (8) and the central sector (6). The reinforcement (13) also further has side extensions on the side walls (4, 9). The reinforcement (13) is configured to increase the strength of the front cross-member in a specific area, such as the base (3), without requiring the thickness of the entire front cross-member to be increased.

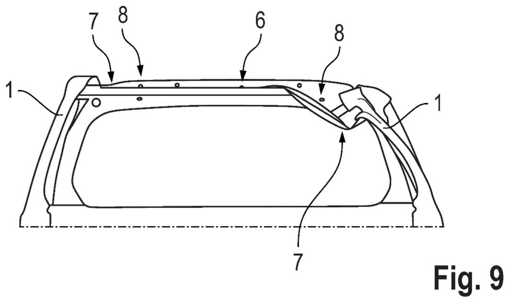

In the event of an accident, following an impact or rollover of the vehicle, the structure of the vehicle becomes deformed, as shown in Figure 9, caused by a significant force on the side (1) and the roof. Said Figure 9 shows an example of deformation of the front cross-member described above, depicting the structure of the vehicle and the front cross-member schematically.

Following the application of this force, the roof and flank (1) collapse. Similarly, the front cross-member is also deformed. As mentioned, one of the results is to obtain stability in terms of the deformation of said front cross-member. The aim, therefore, is for the deformation to always occur at the same points or in the same areas. Thus, thanks to the geometry of the front cross-member object of the present invention, deformation occurs in the transition area between the central sector (6) and the intermediate sector (8) closest to the flange (1) undergoing deformation, and in the area of mechanical connection between the affected flange (1) and the adjacent side sector (7).

Thus, the side sector (7) is fixed to the flank (1) and moves with the flank (1), but maintains its shape to prevent breaking or separation between the front cross-member and the flank (1). As shown, the two deformation areas or hinge joints mentioned above are generated such that the central sector (6) remains in position, with deformation occurring in the intermediate sector (8) because its section with the third distance (d3) is less than the section with the second distance (d2) of the displaced side sector (7). In this way, it is anticipated that deformation of the front cross-member occurs repeatedly in the aforementioned deformation areas or hinge joints.

## Claims

1. A vehicle front cross-member intended to be fixed transversely between side structural flanks (1) of the vehicle and to an outer roof covering (2), wherein the front cross-member comprises a profile consisting of:
a base (3) with its two shorter sides facing the flanks (1) and its two longer sides perpendicular to the shorter sides,
a rear fixing flange (5) and a front fixing flange (10) defining two support surfaces intended to contact and be fixed to the outer roof covering (2), and
a rear side wall (4) and a front side wall (9) facing one another, each of which connects a respective longer side of the base (3) to the rear fixing flange (5) and the front fixing
flange (10), respectively,
**characterised in that** the profile of the front cross-member defines, along the longer sides of the base (3), several sectors consisting of:
a central sector (6),
two side sectors (7) intended to be fixed to each of the flanks (1), and
two intermediate sectors (8) situated between each side sector (7) and the central sector (6),
wherein
the central sector (6) comprises a first distance (d1) defined between the rear flange (5) and the base (3) the value of which is constant throughout said central sector (6),
each side sector (7) comprises a second distance (d2) defined between the rear flange (5) and the base (3), the value of which is constant throughout each side sector (7) and greater than the first distance (d1) of the central sector (6), and
the intermediate sector (8) comprises a third distance (d3) defined between the rear flange (5) and the base (3), the value of which is variable between the first distance (d1) and the second distance (d2).

2. The front cross-member of claim 1, wherein the third distance (d3) decreases from the second distance (d2) of the side sectors (7) to the first distance (d1) of the central sector (6).

3. The front cross-member of claim 2, wherein the third distance (d3) decreases progressively from the second distance (d2) of the side sectors (7) to the first distance (d1) of the central sector (6).

4. The front cross-member according to any of the preceding claims, wherein the two support surfaces of the fixing flanges (5, 10) are flat throughout the side sectors (7), the intermediate sectors (8) and the central sector (6).

5. The front cross-member according to any of the preceding claims, wherein the central sector (6) comprises a length, according to the direction of the longer sides of the base (3), of between 15% and 60% of the sum of the lengths of the side sectors (7), the intermediate sectors (8) and the central sector (6).

6. The front cross-member according to any of claims 1 to 4, wherein the central sector (6) comprises a length, according to the direction of the longer sides of the base (3), of between 45% and 55% of the sum of the lengths of the side sectors (7), the intermediate sectors (8) and the central sector (6).

7. The front cross-member according to any of the preceding claims, wherein the first distance (d1) is between 15% and 50% less than the second distance (d2).

8. The front cross-member according to any of claims 1 to 6, wherein the first distance (d1) is between 30% and 40% less than the second distance (d2).

9. The front cross-member according to any of the preceding claims, further comprising brackets (11) in the side sectors (7) intended to fix the side sectors (7) to the flanks (1).

10. The front cross-member according to any of the preceding claims, further comprising a longitudinal cover (12) between the flanks (1), which is fixed on the base (3) and on at least one fixing flange (5, 10) and intended to adapt the fixing flange (5, 10) to the outer covering (2).

11. The front cross-member according to any of the preceding claims, further comprising a longitudinal reinforcement (13) between the flanks (1), which is fixed to the base (3).
